# EUROPÄISCHE PATENTSCHRIFT

(11) **EP 4 667 861 B1**
(45) Veröffentlichungstag und Bekanntmachung des Hinweises auf die Patenterteilung: **02.12.2026**
(21) Anmeldenummer: 25183971.8
(22) Anmeldetag: 19.06.2025
(51) Int. Cl.: F28D 20/00, F24H 1/18

(54) **HOCHTEMPERATURFESTSTOFFSPEICHER, HOCHTEMPERATURFESTSTOFFSPEICHERSYSTEM SOWIE VERFAHREN ZUM STEUERN EINER VAKUUMDÄMMUNG**
HIGH TEMPERATURE SOLID STORAGE, HIGH TEMPERATURE SOLID STORAGE SYSTEM, AND METHOD FOR CONTROLLING VACUUM INSULATION
ACCUMULATEUR À HAUTE TEMPÉRATURE À L'ÉTAT SOLIDE, SYSTÈME DE STOCKAGE À HAUTE TEMPÉRATURE À L'ÉTAT SOLIDE ET PROCÉDÉ DE COMMANDE D'UN ISOLANT SOUS VIDE

(30) Priorität: 21.06.2024 DE 102024117609
(43) Veröffentlichungstag der Anmeldung: 24.12.2025
(73) Patentinhaber: Steinbeis Innovation gGmbH, 70599 Stuttgart (DE)
(72) Erfinder: ZARGARI, Mani, 38144 Braunschweig (DE); FISCH, Manfred Norbert, 38144 Braunschweig (DE)
(74) Vertreter: Gramm, Lins & Partner Patent- und Rechtsanwälte PartGmbB

(56) Entgegenhaltungen:
- WO-A1-2023/073334
- DE-A1- 102013 003 357
- DE-A1- 102013 007 610
- DE-U1- 202021 004 024

## Beschreibung

Die Erfindung betrifft einen Hochtemperaturfeststoffspeicher für ein Warmwassersystem, ein Hochtemperaturfeststoffspeichersystem sowie ein Verfahren zum Steuern einer veränderbaren Vakuumdämmung um eine vorgebbare Leistung, welche von einem Hochtemperaturfeststoffspeicher an ein Fluid durch die veränderbare Vakuumdämmung hindurch abgegeben wird, einzustellen.

Der Anmeldung liegt die Idee zu Grunde, dass Strom in andere Energieformen umgewandelt werden kann und entweder zu einem späteren Zeitpunkt wieder verstromt oder die Energie in anderer Form verwendet werden kann. Eine Möglichkeit besteht in der Umwandlung des Stromes in Wärmeenergie mittels Widerstandsheizungen. Die so erzeugte Wärme kann direkt oder mit zeitlicher Verzögerung genutzt werden. Stand der Technik sind Widerstandsheizungen mit denen hitzebeständiges Material wie mineralische Stoffe oder auch Metalle aufgeheizt werden. Das Speichermaterial ist in mineralischen Wärmedämmstoffen eingebettet. Bei Bedarf zur Wärmeabnahme wird die Wärme üblicherweise konvektiv mit einem Luftstrom dem Verwertungsort zugeführt. Durch die hohen Temperaturen, die hiermit erreicht werden (bis zu 800°C) sind die Wärmeverluste während der Speicherzeit hoch, so dass sich diese Speichermethode nur für kurze Zeiträume von Stunden bis höchstens Tagen eignet. Diese Technologie wird in erster Linie im industriellen Umfeld angewendet, ist aber auch im Gebäudebereich in der Form von Nachtspeicheröfen bekannt.

Für die saisonale Langzeitspeicherung von Wärme werden sehr große Wasserbecken (Wasservolumina > 10.000 m³) verwendet, in denen das Wasser auf maximal 90°C aufgeheizt wird. Das Wasser kann mit Solarthermie, industrieller Überschusswärme oder Wärmepumpen erwärmt werden. Die Wärmedämmung erfolgt mit konventionellen Wärmedämmmaterialien, wie Mineralwolle, Dämmsteine oder geschäumten Kunststoffen. Wärmeverluste werden in Kauf genommen und durch die Größe der Speicher ausgeglichen.

Photovoltaisch erzeugter Strom (PV-Strom) nimmt einen immer größeren Anteil in der Stromerzeugung ein. Die im Jahr 2023 installierte Leistung von rund 82 GWp überschreitet die maximale Stromlast von 80 GW. Der Anteil an PV-Strom im Stromnetz ist sowohl täglich während der der Mittagszeit und auch saisonal während der Sommerzeit am höchsten.

Während dieser Zeiten kommt es zu Stromüberschüssen im Netz, die zu einer Abregelung von nachhaltigen Stromerzeugern führen, aber auch temporär niedrige Marktpreise ermöglichen. Für abgeregelte nachhaltige Stromerzeuger werden gesetzliche Entschädigungsleistungen an die Anlagenbetreiber bezahlt, die im Jahr 2021 807 Mio. € betrugen und weiter stetig steigen.

Im Gebäudesektor besteht der Bedarf an einer nachhaltigen Energieversorgung insbesondere zur Wärmeversorgung der Gebäude. Der Bedarfszeitraum (Winterhalbjahr) deckt sich jedoch nicht mit dem Zeitraum von überschüssigen PV-Strom (Sommerhalbjahr), der zur wirtschaftlichen Wärmeversorgung genutzt werden könnte. Dies stellt den größten Hinderungsgrund für die gewünschte Sektorenkopplung zwischen Strom und Wärme dar.

Daher ist eine Technologie gefordert, die es ermöglicht sommerlichen Überschussstrom im Winterhalbjahr für die Wärmeversorgung von Gebäuden nutzbar zu machen. Der Raumbedarf einer derartigen Technologie sollte es erlauben sie im Gebäude oder im nahen Gebäudebereich unterzubringen. Weiterhin sind ein geringer Wartungsaufwand und Verschleißanfälligkeit im Sinne geringer Betriebskosten erstrebenswert. Eine Möglichkeit zur Erfüllung dieser Anforderung besteht in der Kombination eines Hochtemperaturspeichers mit einer Vakuumisolierung und der Wärmeabnahme für ein gebäudebasiertes Warmwassersystem in der äußeren Hülle des Speichers. Da der Speicherkern eine große Temperaturspanne durchschreitet, ist es erforderlich den Wärmestrom zur Wärmeabnahme so zu regeln, dass weder auf der hydraulischen Seite Übertemperaturen entstehen, die den Siedepunkt des Wassers überschreiten oder die Betriebssicherheit gefährden, noch dass der Wärmestrom zu gering ist, um den Wärmebedarf zu decken. Hierzu wird der Unterdruck in der Vakuumisolierschicht so geregelt, dass in Abhängigkeit vom Ladezustand des Speicherkerns (Temperaturniveau) und dem Wärmebedarf ein ausreichender aber nicht zu hoher Wärmestrom gewährleistet wird.

Im Gegensatz zu einem Langzeit-Wasserspeichers besteht der Vorteil eines Hochtemperaturspeichers in seiner geringen Größe. Ein Hochtemperaturspeicher, der mit einer gebäudebasierten PV-Anlage auf 800 °C aufgeheizt wird und ein Speichermaterial hoher Dichte aufweist (Maghemit mit ca. 3,6 g/cm³) erlaubt die Speicherung des gesamten Wärmebedarfs eines Einfamilienhauses für ein Winterhalbjahr in einem Volumen von ca. 5 m³. Dies ermöglicht die Aufstellung in unmittelbarer Gebäudenähe oder innerhalb eines Gebäudes. Durch die lokale Nutzung des erzeugten PV-Stroms entfällt die Netzeinspeisung und führt somit zu einer Netzentlastung.

Die Abnahme der Wärme in der äußeren Hülle durch Wärmeleitung ermöglicht die Konstruktion einer geschlossenen Wärmedämmhülle ohne Öffnungen, die erforderlich wären, um die Wärme konvektiv nach außen zu führen. Darüber hinaus werden Wärmeverluste durch die Vakuumdämmung durch die Wärmeabnahme in der äußeren Hülle abgefangen und nutzbar gemacht. Dies steigert die Effizienz und somit Wirtschaftlichkeit des Speichers. Durch die Minimierung von mechanischen Komponenten, wie sie bei der konvektiven Abfuhr von Wärme erforderlich sind (Klappen, Ventilatoren, Filter), ist von einer hohen Standzeit mit geringem Wartungsaufwand auszugehen.

DE 20 2021 004 024 U1 offenbart die Merkmale des Oberbegriffs des Anspruchs 1 und betrifft einen Hochtemperaturwärmespeicher für ein Gebäudeheizsystem mit einem Feststoffspeichermedium und einer steuerbaren Vakuumdämmung zur Steuerung der Wärmeübertragung.

Im Gegensatz zu wasserbasierten Wärmespeichern ist aufgrund der geringen Baugröße eine Aufstellung im Gebäudebereich möglich, die die saisonale Speicherung des gesamten Wärmebedarfs eines Winterhalbjahres erlaubt. Aufgrund der höheren Dichte eines mineralischen Speichermaterials (Maghemit 3,6 g/cm³) und der der höheren Temperaturspreizung (700 °C) ergibt sich ein Speicherkern, der um den Faktor 36 kleiner ist als ein druckloser wasserbasierter Speicher. Durch die Kombination der Hochtemperaturspeicherung mit einer Vakuumdämmung ist im Gegensatz zu herkömmlichen Dämmmaterialien eine saisonale Speicherung möglich. Somit stellt die Erfindung im Gegensatz zu den beschriebenen Speichermöglichkeiten eine Technologie dar, die mit saisonalem zeitlichen Versatz eine Sektorenkopplung zwischen Strom und Wärme ermöglicht. Infolgedessen kann der Nutzungsanteil nachhaltiger Energiequellen bei gleichzeitiger Netzdienlichkeit erhöht werden. Aufgabe der vorliegenden Erfindung ist es einen Hochtemperaturfeststoffspeicher, ein Hochtemperaturfeststoffspeichersystem sowie ein Verfahren bereitzustellen, bei dem die Wärmeabgabe von einem Hochtemperaturspeicherelement variable an einen Wärmebedarf anpassbar ist.

Die Aufgabe wird durch die unabhängigen Ansprüche gelöst. Die abhängigen Ansprüche geben vorteilhafte Weiterbildungen an.

Ein erster Aspekt betriff einen Hochtemperaturfeststoffspeicher für ein Warmwassersystem mit den Merkmalen des Patentanspruchs 1.

Unter einem Hochtemperaturfeststoffspeicher ist ein Speicher zu verstehen, welcher einen Feststoff aufweist. Dabei ist insbesondere vorgesehen, dass der Feststoff auf eine hohe Temperatur aufgeheizt wird. Als eine hohe Temperatur sind Temperaturen von bis zu 1000 °C, insbesondere bis zu 800 °C zu verstehen. Ein Hochtemperaturfeststoffspeicher, der einen solchen Feststoff umfasst, benötigt eine entsprechende Auslegung. Insbesondere ist es nicht nur erforderlich, dass der Feststoffspeicher selbst für die entsprechende Temperatur ausgelegt ist, sondern auch die im Hochtemperaturfeststoffspeicher verbauten Komponenten.

Insbesondere kann es vorgesehen sein, dass der Hochtemperaturfeststoffspeicher dazu ausgebildet ist, die eingespeicherte Wärmeenergie an ein Warmwassersystem abzugeben bzw. bereitzustellen. Im Gegensatz zu dem Feststoffspeicherelement selbst wird ein Warmwassersystem üblicherweise mit weniger als 80°, insbesondere mit weniger als 60 °C betrieben. Folglich ist es erforderlich, dass die vom Feststoffspeicherelement abgegebene Energie so geregelt wird, dass dieses ein Fluid vorzugsweise Wasser, auf eine gewünschte Temperatur des Warmwassersystems erwärmt. Neben der Speisung eines Warmwassersystems ist auch eine Wandlung der thermischen Energie zurück in elektrische Energie. Unter einem Warmwassersystem ist im Sinne dieser Anmeldung entweder ein System für Warmwasser, wie beispielsweise warmes Wasser zum Duschen, und/oder ein System für warmes Wasser für den Wärmebedarf einer Raumheizung zu verstehen.

Mit anderen Worten ist, dass das Speicherelement mit einer Leitung des Warmwasserspeichers thermisch gekoppelt. Unter der thermischen Kopplung ist insbesondere zu verstehen, dass das Speicherelement thermische Energie an ein Fluid, welches sich in Leitung befindet, abgeben kann. Das Fluid kann dann mittels einer Umwälzpumpe weiter durch die Leitung des Warmwassersystems gefördert werden, sodass ein Wärmetransport stattfindet.

Hierzu ist vorgesehen, dass der Hochtemperaturfeststoffspeicher eine erste Kammer aufweist. Insbesondere ist vorgesehen, dass die erste Kammer eine erste Kammerwand aus einem ersten Kammerwandmaterial aufweist. Dabei ist unter einer Kammer ein in sich geschlossener Körper zu verstehen, welcher andere Körper, wie beispielsweise das Speicherelement umfassen kann. Die Kammer kann beispielsweise als Kugel, als Quader, als Würfel, als Zylinder oder in einer anderen Form ausgebildet sein. Vorzugsweise kann vorgesehen sein, dass das erste Kammerwandmaterial der ersten Kammerwand aus einem hitzebeständigen Material gebildet ist. Insbesondere kann vorgesehen sein, dass das erste Kammerwandmaterial bis zu 1000 °C, insbesondere bis zu 800 °C thermisch beständig ist. Denkbar ist beispielsweise, dass das erste Kammerwandmaterial Stahl ist. Dabei versteht sich, dass eine Vielzahl an Materialien für eine Hitze oberhalb von 1000 °C ausgebildet sind, sodass im Weiteren dieser Anmeldung Stahl als ein Beispiel für eine Vielzahl von möglichen Materialien zu verstehen ist und insbesondere nicht auf Stahl limitiert ist.

Weiter ist vorgesehen, dass in der ersten Kammer das Speicherelement angeordnet ist. Erfindungsgemäß ist vorgesehen, dass das Speicherelement ein Feststoff ist. Dieser Feststoff ist dazu ausgebildet thermische Energie zu speichern. Insbesondere kann vorgesehen sein, dass die thermische Energie mittels Heizstäben, welche mit dem Feststoff in Kontakt sind, eingebracht wird. Mit anderen Worten ist das Speicherelement dazu ausgebildet elektrische Energie, welche in thermische Energie gewandelt wurde, zu speichern.

Weiter ist vorgesehen, dass der Hochtemperaturfeststoffspeicher eine zweite Kammer mit einer zweiten Kammerwand aus einem zweiten Kammerwandmaterial aufweist. Dabei kann vorgesehen sein, dass das erste Kammerwandmaterial von dem zweiten Kammerwandmaterial verschieden ist. Insbesondere ist vorgesehen, dass zwischen der zweiten Kammerwand und der ersten Kammerwand eine veränderbare Vakuumdämmung angeordnet ist. Mit anderen Worten ist die zweite Kammer größer als die erste Kammer. Insbesondere umfasst die zweite Kammer räumlich die erste Kammer. Dabei kann vorgesehen sein, dass zu mindestens Teile der ersten Kammerwand der zweiten Kammerwand entsprechen. Beispielsweise kann die erste Kammer ein Würfel sein und die zweite Kammer kann ebenfalls ein Würfel sein, jedoch weist der Würfel der ersten Kammer eine andere Kantenlänge als der Würfel der zweiten Kammer auf. Nichtsdestotrotz kann vorgesehen sein, dass eine Seitenfläche des Würfels der ersten Kammer zumindest teilweise einer Seitenfläche des Würfels der zweiten Kammer entspricht. Insbesondere kann der Teil, der einander entspricht, einen Boden des Hochtemperaturfeststoffspeicher bilden. Insbesondere kann vorgesehen sein, dass durch einen solchen Boden elektrische Verbindungselemente zum Kontaktieren der Heizelemente hindurchgeführt werden, sodass diese Verbindungselemente sowohl durch die erste Kammerwand als auch durch die zweite Kammerwand geführt werden.

Weiter kann vorgesehen sein, dass die zweite Kammerwand aus einem von der ersten Kammerwand verschiedenen Material hergestellt ist. Durch die zwischen der ersten Kammerwand und zweiten Kammerwand angeordnete veränderbare Vakuumdämmung kann eine Isolation zwischen der ersten Kammerwand und der zweiten Kammerwand insbesondere zwischen dem Feststoffspeicherelement und der zweiten Kammerwand variabel eingestellt werden. Durch die bereitgestellte Isolation mittels der veränderbaren Vakuumdämmung kann die zweite Kammerwand aus einem Material gebildet sein, welches eine geringere Temperaturbeständigkeit als das erste Kammerwandmaterial hat.

Insbesondere kann vorgesehen, dass die veränderbare Vakuumdämmung, welche zwischen der ersten Kammer und der zweiten Kammer angeordnet ist, die erste Kammer vollständig räumlich umfasst. Mit anderen Worten kann vorgesehen sein, dass Außenseiten der ersten Kammerwand mit dem Vakuum in Kontakt, insbesondere in direkten Kontakt, sind. Es kann aber auch vorgesehen sein, dass nur ein Teil der Außenseiten, insbesondere ein Großteil der Außenseiten, mit dem Vakuum in direkten Kontakt stehen. Wie bereits oben beschrieben kann vorgesehen sein, dass ein Teil der ersten Kammerwand mit einem Teil der zweiten Kammerwand einen gemeinsamen Boden bildet. In diesem Fall umgibt das Vakuum einen Großteil der ersten Kammer, jedoch umfasst das Vakuum nicht die gesamte Kammer. Analog gilt die oben erläuterte Thematik ebenfalls für die Innenseiten der zweiten Kammer. Vorzugsweise ist vorgesehen, dass die gesamte Innenseite der zweiten Kammer in Kontakt, insbesondere in direkten Kontakt, mit dem Vakuum steht. Jedoch kann auch vorgesehen sein, dass in dem Fall, in dem ein Teil der ersten Kammerwand mit einem Teil der zweiten Kammerwand einen gemeinsamen Boden bildet, nur ein Teil, insbesondere ein Großteil, der Innenseiten der zweiten Kammerwand mit dem Vakuum in Kontakt stehen.

Insbesondere weist der Hochtemperaturfeststoffspeicher kein zusätzliches oder weiteres, auch kein verschiedenes Vakuum, zur veränderbaren Vakuumdämmung auf. Insbesondere ist ein einziges Vakuum, nämliche die veränderbare Vakuumdämmung, zwischen der ersten Kammerwand und der zweiten Kammerwand angeordnet. Insbesondere ist das veränderbare Vakuum in direktem Kontakt mit der ersten Kammerwand und der zweiten Kammerwand.

Ferner ist vorgesehen, dass das Vakuum veränderlich ist. Unter "veränderlich" ist hierbei insbesondere eine einstellbare bzw. veränderbare Vakuumdämmung zu verstehen. Beispielsweise weist die zweite Kammer einen Anschluss auf, sodass ein Zwischenraum zwischen der ersten Kammer und der zweiten Kammer mit einer Vakuumpumpe verbindbar ist. Weiter versteht sich, dass die erste Kammerwand wie auch die zweite Kammerwand aus einem für ein Vakuum geeignetes Material hergestellt sein kann. Insbesondere kann vorgesehen sein, dass die zweite Kammerwand eine hinreichende Materialstärke aufweist. Durch das Einstellen des Vakuumdrucks kann die Isolation zwischen dem Feststoffspeicherelement, bzw. der ersten Kammerwand und der zweiten Kammerwand veränderlich eingestellt werden. Insbesondere ist die Wärmeübertragung zwischen dem Speicherelement und dem ersten Abschnitt durch Verändern der veränderbaren Vakuumdämmung veränderbar. Beispielsweise wäre denkbar, dass das Speicherelement eine Temperatur von 800 °C aufweist und die Vakuumdämmung so eingestellt wird, dass von dem Speicherelement nur so viel thermischen Energie durch die Vakuumdämmung übertragen wird, dass die zweite Kammerwand eine Temperatur von 60° aufweist. Dabei sind die Zahlenwerte insbesondere nur exemplarisch. Denkbar wäre auch, dass das Speicherelement eine Temperatur von 750 °C aufweist und die zweite Kammerwand eine Temperatur von 70 °C aufweist.

Ferner ist vorgesehen, dass der erste Abschnitt außerhalb der zweiten Kammer angeordnet ist. Vorzugsweise ist vorgesehen, dass der erste Abschnitt an einer Außenseite der zweiten Kammer angeordnet ist. Insbesondere ist der erste Abschnitt vollständig außerhalb der zweiten Kammer angeordnet. Weiter kann vorgesehen sein, dass der erste Abschnitt zumindest Teile der Außenseite der zweiten Kammer umschließen. Denkbar wäre jedoch auch, dass der Abschnitt mäanderförmig und/oder schneckenförmig um eine Außenseite einer einzelnen Wand der zweiten Kammer oder um mehrere Wände der Außenseite der zweiten Kammer angeordnet sind. Vorzugsweise ist der erste Abschnitt so angeordnet, dass eine Wärmeübertragung zwischen der zweiten Kammerwand und dem Fluid, welches sich in dem ersten Abschnitt befinden kann, positiv beeinflusst wird. Dies bedeutet insbesondere, dass der erste Abschnitt so anzuordnen ist, dass zwischen der zweiten Kammerwand und dem ersten Abschnitt bzw. der zweiten Kammerwand und dem Fluid in dem ersten Abschnitt eine besonders hohe thermische Leitfähigkeit bereitgestellt wird. Insbesondere sind Wärmeverluste zwischen der zweiten Kammer und dem ersten Abschnitt zu vermeiden. Wie bereits eingangs beschrieben, kann das Fluid, vorzugsweise Wasser, welches sich in dem ersten Abschnitt befinden kann, mittels einer Umwälzpumpe des Warmwassersystems durch den ersten Abschnitt des Warmwassersystems gepumpt werden, sodass eine vom Speicherelement abgegebene thermische Energie genutzt werden kann, um Energie für ein Warmwassersystem bereitzustellen.

Weiter ist der erste Abschnitt ein Teil einer Leitung, welche mit einer Pumpe einen Kreislauf bildet, sodass thermische Energie im Bereich des ersten Abschnitts durch das Fluid aufnehmbar ist und in einem von dem ersten Abschnitt verschiedenen Bereich an die Umgebung abgegeben werden kann. Beispielsweise kann die Leitung ein Heizsystem oder Warmwassersystem bilden. Beispielsweise kann mit der aufgenommenen Energie ein Warmwassersystem, insbesondere eine Heizung, gespeist werden. Alternativ bildet die Leitung eine Fußbodenheizung. Die Leitung ist so ausgebildet, dass diese ein Kreislauf bildet. Vorzugsweise wird das Fluid mit der Pumpe in den Leitungen im Kreis gepumpt. Mit anderen Worten zirkuliert das Wasser in der Leitung.

Bei der Pumpe handelt und dem Fluid handelt es sich um kein wesentliches Element der Erfindung. Die Erfindung ist auch ohne die Pumpe und das Fluid ausführbar. Insbesondere stellt nur der erste Abschnitt der Leitung ein wesentliches Element da. Ob der erste Abschnitt der Leitung mit einem weiteren Abschnitt der Leitung verbunden ist, ist kein wesentliches Element.

In einer Ausführungsform kann vorgesehen sein, dass zwischen der ersten Kammerwand und der zweiten Kammerwand zusätzlich zur regelbaren Vakuumdämmung ein erstes Dämmmaterial angeordnet ist.

Insbesondere zwischen der ersten Kammer und der zweiten Kammer, kann ein zusätzliches erstes Dämmmaterial angeordnet sein. Insbesondere kann das Dämmmaterial in der veränderbaren Vakuumdämmung angeordnet sein.

Das erste Dämmmaterial hat den Vorteil, dass die thermische Isolation zwischen der ersten Kammerwand und der zweiten Kammerwand weiter verbessert werden kann. Insbesondere kann durch das erste Dämmmaterial thermische Strahlung des Speicherelements unterbunden bzw. gestreut werden. Dies hat den technischen Effekt, dass die Wärmeübertragung zwischen dem Feststoffspeicher und der zweiten Kammerwand insbesondere der Leitung reduziert wird. Eine solche Reduktion ist besonders dann wünschenswert, wenn die thermische Energie des Speicherelements nicht an das Warmwassersystem abgegeben werden soll. Mit anderen Worten ist eine solche Reduktion dann wünschenswert, wenn thermische Energie in dem Speicherelement gespeichert bzw. verbleiben soll.

Eine weitere Ausführungsform kann vorsehen, dass das erste Dämmmaterial ein mikroporöses Material, insbesondere Perlit, vorzugsweise expandiertes Perlit, und/oder expandiertes Perlit und Siliziumkarbid und/oder pyrogene Kieselsäure aufweist.

In einem weiteren Ausführungsbeispiel kann vorgesehen sein, dass die erste Kammerwand durch das Speicherelement gebildet ist.

Mit anderen Worten kann vorgesehen sein, dass das Speicherelement mit der ersten Kammerwand einstückig ausgebildet ist. Vorgesehen sein kann auch, dass das Speicherelement mit der Kammerwand formschlüssig ist. Dies hat den Vorteil, dass die erste Kammerwand selbst Teil des Speicherelements ist, sodass auch das Speicherelementvolumen vergrößert werden kann und die Temperaturleitfähigkeit zwischen dem Speicherelement und der Leitung weiter verbessert werden kann. Insbesondere kann die thermische Energie von dem Speicherelement direkt an die zweite Kammerwand durch die Vakuumdämmung hindurch abgegeben werden. Insbesondere kann eine Abstimmung des ersten Kammerwandmaterial auf das Speicherelement hinsichtlich der das thermischen Ausdehnungskoeffizienten unberücksichtigt bleiben, wenn die erste Kammerwand durch das Speicherelement selbst gebildet wird.

Beispielsweise kann vorgesehen sein, dass das Speicherelement aus Stahl gebildet ist bzw. Stahl aufweist. Denkbar wäre, dass sowohl das Speicherelement als auch die Kammerwand aus Stahl sind. Vorzugsweise bildet das Speicherelement aus Stahl gleichzeitig auch die erste Kammerwand. Denkbar wäre auch, dass das Speicherelement aus Maghemit ist. Mit anderen Worten, wenn die erste Kammerwand durch das Speicherelement selbst gebildet wird, kann auf eine erste Kammer verzichtet werden bzw. die erste Kammer kann durch das Speicherelement selbst gebildet werden. Mit anderen Worten grenzt die veränderbare Vakuumdämmung direkt bzw. unmittelbar an das Speicherelement und/oder an die zweite Kammerwand, insbesondere an die Innenseite der zweiten Kammerwand.

In einer anderen Ausführungsform kann vorgesehen sein, dass der Feststoff einen mineralischen Stoff, einen keramischen Stoff, ein Metall und/oder Graphit aufweist.

Vorgesehen sein kann, dass der Feststoff einen Schmelzpunkt von über 1200 °C, insbesondere 1000 °C, vorzugsweise 800 °C hat. Weiter kann vorgesehen sein, dass der Feststoff bei Arbeitstemperatur, insbesondere bis zum Schmelzpunkt, keine chemische Veränderung erfährt, also beispielsweise nicht oxidiert oder chemisch zerfällt. Beispielsweise kann der Feststoff Stahl, Keramik oder ein Gestein sein.

Vorgesehen sein kann auch, dass der Feststoff Maghemit oder ein Material mit einer Dichte unter 4g / cm³, insbesondere unter 2g / cm³ ist.

Anhand der spezifischen Wärmekapazität wird die sogenannte spezifische Wärmespeicherzahl berechnet, die sich aus der Multiplikation von der Rohdichte mit der spezifischen Wärmekapazität eines Stoffes ergibt. Diese Kennzahl wird somit in J/(m3*K) angegeben. Mit anderen Worten steht die Dichte im Zusammenhang mit der spezifischen Wärmekapazität. Insbesondere nimmt spezifische Wärmekapazität mit der Dichte zu. Beispielsweise weist Maghemit einer Dichte von 3,7 g / cm³ auf. Durch eine hohe spezifische Wärmekapazität bzw. einer hohen Dichte kann mehr Energie auf dem gleichen Volumen bzw. mehr thermische Energie auf einem geringeren Volumen gespeichert werden. Dies hat den Vorteil, dass eine kompaktere Bauform ermöglicht wird.

Vorgesehen sein kann auch, dass das erste Kammerwandmaterial von dem zweiten Kammerwandmaterial verschieden ist oder das erste Kammerwandmaterial und das zweite Kammerwandmaterial aus dem gleichen Material, insbesondere Stahl, sind.

Durch die Isolation mittels der Vakuumdämmung kann die Temperatur, welche an der zweiten Kammer, bzw. der zweiten Kammerwand anliegt, eingestellt werden. Vorzugsweise beträgt die Temperatur an der zweiten Kammerwand eine Temperatur unterhalb des Siedepunkts von Wasser, vorzugsweise unter 60 °C. Hierdurch kann die zweite Kammerwand aus einem von der ersten Kammerwand verschiedenen Material hergestellt werden, da die Anforderungen bezüglich der thermischen Beständigkeit geringer sind. Hingegen ist es erforderlich, dass die erste Kammerwand für eine Feststoffspeicherelementtemperatur ausgelegt ist.

Gemäß einer weiteren Ausführungsform weist der erste Abschnitt an einer der zweiten Kammer abgewandten Seite eine Wärmedämmung auf, welche von der veränderbaren Vakuumdämmung verschieden ist.

Gemäß einer weiteren Ausführungsform ist der erste Abschnitt als Rohrelement ausgebildet.

Ferner ist vorgesehen, dass Rohrelemente außerhalb der zweiten Kammer angeordnet sind. Vorzugsweise ist vorgesehen, dass die Rohrelemente an einer Außenseite der zweiten Kammer angeordnet sind. Weiter kann vorgesehen sein, dass die Rohrelemente zumindest Teile der Außenseite der zweiten Kammer umschließen. Denkbar wäre jedoch auch, dass die Rohrelemente mäanderförmig und/oder schneckenförmig um eine Außenseite einer einzelnen Wand der zweiten Kammer oder um mehrere Wände der Außenseite der zweiten Kammer angeordnet sind. Vorzugsweise sind die Rohrelemente so angeordnet, dass eine Wärmeübertragung zwischen der zweiten Kammerwand und dem Fluid, welches sich in dem Rohrelement befindet, positiv beeinflusst wird. Dies bedeutet insbesondere, dass die Rohrelemente so anzuordnen sind, dass zwischen der zweiten Kammerwand und den Rohrelementen bzw. der zweiten Kammerwand und dem Fluid in den Rohrelementen eine besonders hohe thermische Leitfähigkeit bereitgestellt wird. Insbesondere sind Wärmeverluste zwischen der zweiten Kammer und dem Rohrelement zu vermeiden. Das Fluid, vorzugsweise Wasser, welches sich in den Rohrelement befindet, mittels einer Umwälzpumpe des Warmwassersystems durch die Rohrelemente des Warmwassersystems gepumpt werden, sodass eine vom Speicherelement abgegebene thermische Energie genutzt werden kann, um Energie für ein Warmwassersystem bereitzustellen.

Gemäß einer weiteren Ausführungsform umfasst der erste Abschnitt die zweite Kammer räumlich.

Vorzugsweise ist der erste Abschnitt so ausgebildet, dass die zweite Kammer von dem ersten Abschnitt umgeben ist. Insbesondere umgibt der erste Abschnitt eine Außenseite der zweiten Kammer. Vorzugsweise bildet der erste Abschnitt eine Kontaktfläche mit der Außenseite. Insbesondere ist der erste Abschnitt in direktem Kontakt mit der Außenseite. Bevorzugt ist der erste Abschnitt wärmeleitfähig mit der Außenseite verbunden. Besonders bevorzugt umgibt der erste Abschnitt einen Großteil, insbesondere vollständig, die Außenseite.

Dies hat den Vorteil, dass eine besonders große Kontaktfläche zwischen der Außenseite und dem ersten Abschnitt besteht, welches die Wärmeleitfähigkeit verbessert.

Gemäß einer weiteren Ausführungsform bildet der erste Abschnitt in die zweite Kammerwand integriert ist oder die zweite Kammerwand den ersten Abschnitt.

Beispielsweise ist der erste Abschnitt in der zweiten Kammerwand angeordnet. Mit anderen Worten wird der erste Abschnitt durch eine Innenseite und der Außenseite der zweiten Kammerwand gebildet, sodass die zweite Kammerwand durchströmbar ist.

Dies hat den Vorteil, dass die Wärmeübertragung zwischen dem Speicherelement und dem ersten Abschnitt der Leitung weiter verbessert wird.

Gemäß einer alternativen Ausführungsform bilden eine Außenseite der zweiten Kammerwand und ein Mantel, welcher an der Außenseite der zweiten Kammerwand angeordnet ist und zu dieser beabstandet ist, den ersten Abschnitt.

Beispielsweise ist der Mantel so angeordnet, dass dieser die zweite Kammer, insbesondere vollständig, umgibt. Durch die Beabstandung des Mantels zur zweiten Kammerwand bildet sich zwischen dem Mantel und der zweiten Kammerwand ein Raum, welcher den ersten Abschnitt bildet, sodass der Raum mit dem Fluid durchströmbar ist. Mit anderen Worten wird der Raum durch die zweite Kammerwand und dem Mantel räumlich begrenzt.

Beispielsweise weist der Mantel einen Zulauf und einen Ablauf für das Fluid auf. Insbesondere ist der Zulauf auf einer der zweiten Kammer gegenüberliegenden Seite angeordnet. In einem anderen Beispiel ist der Zulauf unten beziehungsweise unterhalb des Ablaufs angeordnet.

Die hat den Vorteil, dass das Fluid, welches bereits im Kreislauf Wärme abgegeben hat, zunächst erwärmt wird, bevor das Fluid aus dem Ablauf austritt. Dies ermöglicht eine homogene Erwärmung des Fluids.

Ein weiterer Aspekt betrifft ein Hochtemperaturfeststoffspeichersystem, das einen Hochtemperaturfeststoffspeicher wie oben beschrieben, ein Heizelement zum Bereitstellen von thermischer Energie an das Speicherelement, eine Vakuumpumpe, welche mit dem ersten Raum verbunden ist, zum Bereitstellen eines Vakuums an die Vakuumdämmung umfasst. Weiter umfasst das Hochtemperaturfeststoffspeichersystem einen ersten Sensor zum Bestimmen einer Speicherelementtemperatur, einen zweiten Sensor zum Bestimmen eines Vakuumdämmungsdrucks und eine Steuereinheit zum Steuern des Vakuumdämmungsdrucks, welche mit dem Heizelement, dem ersten Sensor und dem zweiten Sensor verbunden ist, um eine Wärmeabgabe von dem Speicherelement an das Fluid in Abhängigkeit von einem Wärmebedarf eines Warmwassersystems und der Speicherelementtemperatur einzustellen.

Durch das Hochtemperaturfeststoffspeichersystem kann ein System zur Regelung des Hochtemperaturfeststoffspeichers bereitgestellt werden. Durch eine die Steuereinheit, welche mit dem Heizelement, dem ersten Sensor und dem zweiten Sensor verbunden ist, können wesentliche Kenngrößen zur Steuerung des Vakuumdämmungsdrucks und damit der Wärmeleitfähigkeit der Vakuumdämmung eingestellt und/oder gesteuert werden. Vorzugsweise ist vorgesehen, dass von einem externen Warmwassersystem eine Wärmebedarfsanforderung bereitgestellt wird. Diese Wärmebedarfsanforderung kann beispielsweise mittels eines Signals an das Hochtemperaturfeststoffspeichersystem übertragen werden. Basierend auf dieser Wärmebedarfsanforderung kann die Steuereinheit mittels des ersten Sensors die Speicherelementtemperatur ermitteln und mittels des zweiten Sensors den Vakuumdämmungsdruck. Basierend auf dem Vakuumdämmungsdrucks und der Speicherelementtemperatur und/oder der Wärmebedarfsanforderung kann die Steuereinheit einen neuen Vakuumdämmungsdruck berechnen, sodass sich eine Wärmeübertragung so eingestellt wird, dass von dem Feststoffspeicherelement die erforderliche Wärmeübertragung gemäß des Wärmebedarfs des Warmwassersystems an das Fluid des Warmwassersystems, welches in der Leitung angeordnet ist, übertragen wird.

Durch das Bereitstellen verschiedener Faktoren und Sensoren wie beispielsweise einer Vakuumpumpe, einem Heizelement und Sensoren kann eine effektive Steuerung basierend auf einem Wärmebedarf eines externen Warmwassersystem erfolgen. Insbesondere kann die Wärmeleitfähigkeit der Vakuumdämmung bedarfsgerecht eingestellt werden.

Beispielsweise weist das Hochtemperaturfeststoffspeichersystem ein Entlüftungsventil in der Leitung auf.

Bei dem Entlüftungsventil handelt es sich um einen Sicherheitsmechanismus, welcher ein Überschreiten von Grenzwerten, insbesondere einer Temperatur oder eines Drucks in der Leitung, verhindert bzw. entgegenwirkt. Dieses Entlüftungsventil ermöglicht einen besonders sicheren Betrieb des Hochtemperaturfeststoffspeichersystems.

Ein weiterer Aspekt betrifft ein Verfahren zum Steuern einer veränderbaren Vakuumdämmung um eine vorgebbare Leistung, welche von einem Hochtemperaturfeststoffspeicher an ein Fluid durch die veränderbare Vakuumdämmung hindurch abgegeben wird, einzustellen, wobei das Verfahren einen Schritt eines Bestimmens einer Speicherelementtemperatur, einen Schritt eines Berechnens eines Vakuumdämmungsdrucks basierend auf der Speicherelementtemperatur und der vorgegebenen Leistung und einen Schritt eines Ansteuerns einer Vakuumpumpe, sodass der berechnete Vakuumsdämmungsdruck eingestellt wird, umfasst.

Durch das Verfahren kann die veränderbare Vakuumdämmung besonders effektiv gesteuert werden und an einer durch das externe Warmwassersystem vorgebbare Leistung angepasst werden. Durch die Anpassung der Vakuumdämmung an die vorgebbare Leistung kann eine Wärmeübertragung genau eingestellt werden.

Vorgesehen sein kann, dass die vorgebbare Leistung von einem Warmwassersystem als Wärmebedarf vorgegeben wird.

Die Erfindung wird anhand der beigefügten Figuren beispielhaft näher erläutert. Es zeigt:
- Figur 1: eine schematische Darstellung eines Hochtemperaturfeststoffspeichers mit einer ersten Kammer und einer zweiten Kammer;
- Figur 2: eine schematische Darstellung einer alternativen Bauform des erfindungsgemäßen Hochtemperaturfeststoffspeichers mit einer ersten Kammer und einer zweiten Kammer;
- Figur 3: eine schematische Darstellung eines Hochtemperaturfeststoffspeichersystems mit einem Hochtemperaturfeststoffspeicher wie in Figur 1 gezeigt, wobei der Hochtemperaturfeststoffspeicher zusätzlich eine dritte Kammer aufweist;
- Figur 4: einen schematischen Signallaufplan einer Steuereinheit eines Hochtemperaturfeststoffspeichersystems; und
- Figur 5: eine schematische Darstellung eines Hochtemperaturfeststoffspeichers mit einem Abschnitt einer Leitung;

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

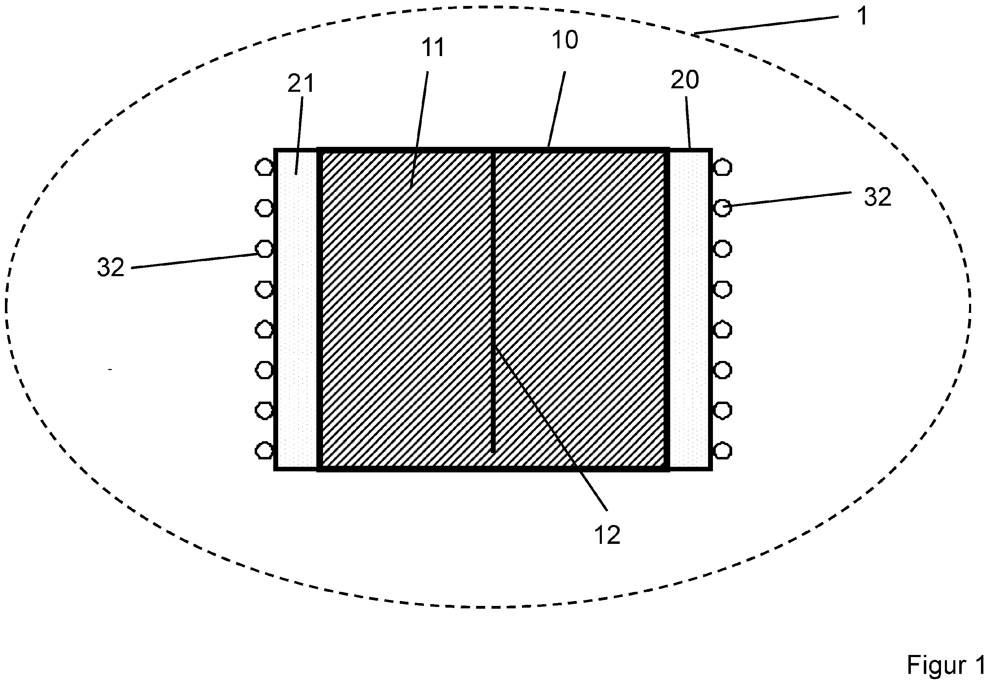

Figur 1 zeigt eine schematische Darstellung des erfindungsgemäßen Hochtemperaturfeststoffspeichers 1 mit einer ersten Kammer 10 und einer zweiten Kammer 20. Im Folgenden wird der Aufbau des Hochtemperaturfeststoffspeichers 1 von innen nach außen beschrieben. Der Hochtemperaturfeststoffspeicher 1 weist eine erste Kammer 10 auf. Die erste Kammer 10 ist so ausgebildet, dass diese das Speicherelement 11 räumlich umschließt. Hierdurch ist das Speicherelement 11 in der Kammer 10 angeordnet. Darüber hinaus ist in der ersten Kammer 10 auch ein Heizstab 12 angeordnet. Insbesondere ist der Heizstab 12 so angeordnet, dass sich der Heizstab 12 oder zumindest eine elektrische Leitung 13 des Heizstabs 12 durch die erste Kammer 10 in das Speicherelement 11 hinein erstreckt.

Weiter weist der Hochtemperaturfeststoffspeicher 1 eine zweite Kammer 20 auf. Dabei ist die zweite Kammer 20 außerhalb der ersten Kammer 10 angeordnet. Insbesondere ist die erste Kammer 10 innerhalb der zweiten Kammer 20 angeordnet. Vorgesehen sein kann auch, dass die erste Kammer 10 zumindest teilweise der zweiten Kammer 20 entspricht. Denkbar ist auch, dass zumindest Teile der ersten Kammerwand der ersten Kammer 10 einem Teil der zweiten Kammerwand der zweiten Kammer 20 entspricht. Mit anderen Worten kann vorgesehen sein, dass zumindest ein Teil der lateralen Abmessungen der ersten Kammer 10 den lateralen Abmessungen der zweiten Kammer 20 entspricht. Dabei kann sowohl vorgesehen sein, dass die erste Kammer 10 als auch die zweite Kammer 20 eine quaderförmige, eine würfelförmige, zylindrischeoder eine kugelförmige Form aufweisen. Denkbar ist auch, dass die erste Kammer 10 und die zweite Kammer 20 unterschiedliche Formen aufweisen. Weiter weist die zweite Kammer 20 die veränderbare Vakuumdämmung 21 auf. Dabei ist die veränderbare Vakuumdämmung 21 zwischen der zweiten Kammerwand und der ersten Kammerwand angeordnet. Mit anderen Worten ist die veränderbare Vakuumdämmung 21 in einem Raum zwischen der ersten Kammer 10 und der zweiten Kammer 20 angeordnet. Insbesondere ist die veränderbare Vakuumdämmung 21 zwischen dem Feststoffspeicherelement 11 und der zweiten Kammerwand der zweiten Kammer 20 angeordnet. Weiter wird in Figur 1 exemplarisch gezeigt, dass ein Rohrelement 32, als erster Abschnitt der Leitung, an der zweiten Kammerwand, insbesondere an einer Außenseite der zweiten Kammerwand angeordnet ist. Dabei kann vorgesehen sein, dass das Rohrelement 32 direkt an der zweiten Kammerwand 21 angeordnet ist. Denkbar ist aber auch, dass das Rohrelement 32 beabstandet zur zweiten Kammerwand angeordnet ist. Insbesondere kann vorgesehen sein, dass das Rohrelement 32 von einer Wärmedämmung 31 umgeben ist. Mit anderen Worten kann das Rohrelement 32 in der Wärmedämmung angeordnet sein. Dies hat den Vorteil, dass Wärmeverluste gegenüber der Umgebung weiter reduziert werden. Figur 1 zeigt dabei, dass ein Teil der ersten Kammerwand einem Teil der zweiten Kammerwand entsprechen kann. Insbesondere kann vorgesehen sein, dass an einem Teil, an dem keine Rohrelemente 32 angeordnet sind, ein gemeinsamer Boden durch die erste Kammerwand 10 und die zweite Kammerwand 20 gebildet wird.

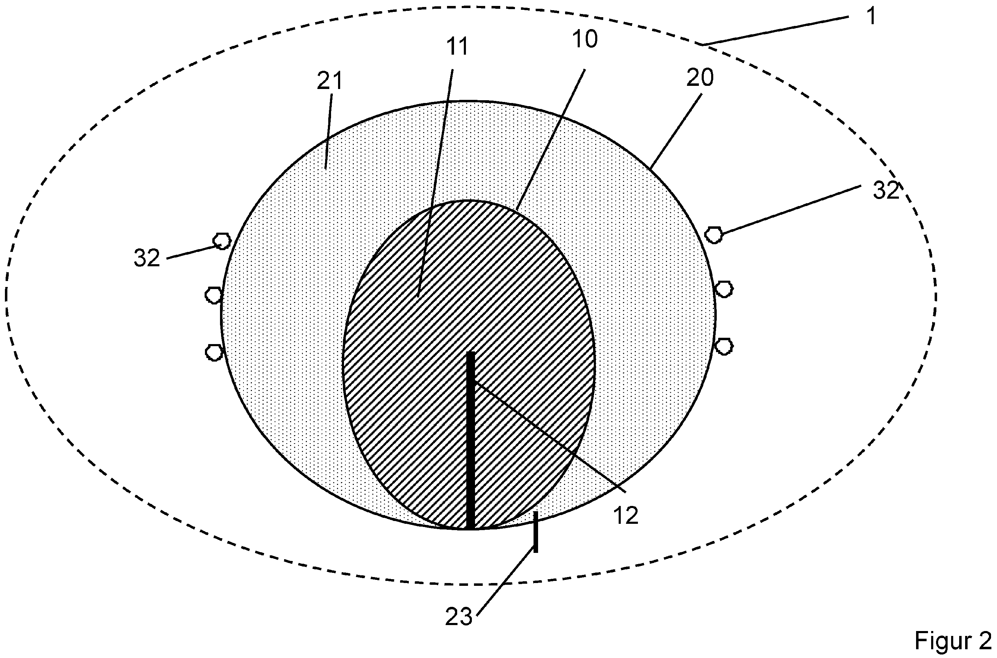

Figur 2 zeigt eine schematische Darstellung einer alternativen Bauform des erfindungsgemäßen Hochtemperaturfeststoffspeichers 1, welcher in Figur 1 gezeigt ist. Dabei ist der Figur 2 zu entnehmen, dass eine Form der ersten Kammer 10 von eine Form der zweiten Kammer 20 verschieden sein kann. Beispielsweise kann die erste Kammer 10 oval sein und die zweite Kammer 20 hohl. Denkbar wäre aber auch, dass die erste Kammer 10 kugelförmig und die zweite Kammer würfelförmig ist. Auch in der in Figur 2 dargestellten Bauform, insbesondere wenn die erste Kammer 10 und die zweite Kammer 20 unterschiedliche Formen aufweisen, können trotzdem die erste Kammer 10 und die zweite Kammer 20 einen gemeinsamen Boden bilden. Durch diesen gemeinsamen Boden kann beispielsweise ein Heizstab 12 in die erste Kammer 10 hinein eingeführt werden. Weiter zeigt Figur 2 ebenfalls das Einführen einer Vakuumleitung 23 in die zweite Kammer 20. Insbesondere ist vorgesehen, dass die Vakuumleitung 23 nur in die zweite Kammer 20 eingeführt ist und nicht in die erste Kammer 10. Hier ist gezeigt, dass in der zweiten Kammer 20 insbesondere im Bereich der Vakuumdämmung 21 ein erstes Dämmmaterial 22 angeordnet sein kann.

Besonders vorteilhaft kann es sein, wenn der Hochtemperaturfeststoffspeicher 1 eine hier nicht gezeigte dritte Kammer 30 aufweist. Dabei kann die dritte Kammer 30 so angeordnet sein, dass die erste Kammer 10, die zweite Kammer 20 und die Rohrelemente 32 in der dritten Kammer 30 angeordnet sind.

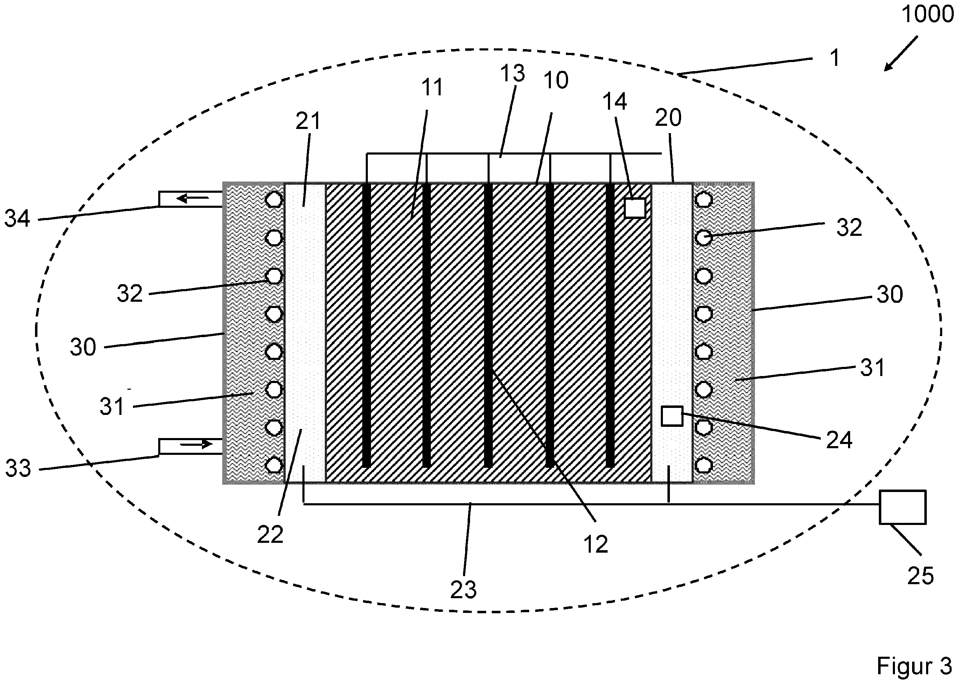

Figur 3 zeigt eine schematische Darstellung eines Hochtemperaturfeststoffspeichersystems 1000 mit einem Hochtemperaturfeststoffspeicher 1 wie in Figur 1 gezeigt, wobei der Hochtemperaturfeststoffspeicher 1 zusätzlich eine dritte Kammer 30 aufweist.

Über die schematische Darstellung aus Figur 1 hinaus weist der Hochtemperaturfeststoffspeicher 1 weiter eine dritte Kammer 30 auf. Die dritte Kammer 30 ist außerhalb der ersten Kammer 10 unter zweiten Kammer 20 angeordnet. Insbesondere ist die erste Kammer 10 und die zweite Kammer 20 in der dritten Kammer 30 angeordnet. Dabei kann vorgesehen sein, dass die dritte Kammer 30 mit der ersten Kammer 10 und der zweiten Kammer 20 einen gemeinsamen Boden bildet. Dies bedeutet, dass zumindest ein Teil der ersten Kammerwand, ein Teil der zweiten Kammerwand und ein Teil der dritten Kammerwand sich überlagern oder zumindest überlappen. Dies hat den Vorteil, dass eine elektrische Verbindung der Heizstäbe durch den gemeinsamen Boden hindurch erfolgen kann.

Weiter kann vorgesehen sein, dass in der dritten Kammer 30 auch die Rohrelemente 32 angeordnet sind. Wie bereits oben ausgeführt, können die Rohrelemente 32 direkt an der zweiten Kammer 20, insbesondere an der zweiten Kammerwand, anliegen. Denkbar ist aber auch, dass die Rohrelemente 32 in der Wärmedämmung 31 beabstandet zur zweiten Kammer 20 und/oder beabstandet zur dritten Kammerwand der dritten Kammer 30 angeordnet sind. Insbesondere kann vorgesehen sein, dass die Rohrelemente 32 von der Wärmedämmung 31 umschlossen oder zumindest teilweise umschlossen werden. Dies verbessert die Isolation des Speicherelements gegenüber der Umgebung weiter.

Zum Anschluss eines hier nicht gezeigten Warmwassersystems kann weiter vorgesehen sein, dass die Rohrelemente einen Zulauf 33 aufweisen. Durch diesen Zulauf 33 kann optional mittels einer Umwälzpumpe das Fluid, vorzugsweise Wasser, durch die Rohrelemente gefördert werden. Insbesondere kann vorgesehen sein, dass der Zulauf 33 von außen in die dritte Kammer 30 hinein an die Rohrelemente 32 angeschlossen ist. Analog kann vorgesehen sein, dass ein Rücklauf 34 an die Rohrelemente 32 angeschlossen ist, sodass das Fluid durch den Rücklauf 34 dem Warmwassersystem zugeführt werden kann.

Darüber hinaus kann vorgesehen sein, dass die Vakuumleitung 23 zumindest durch die zweite Kammerwand hindurch mit der Vakuumdämmung 21 in mindestens einem Bereich verbunden ist, sodass durch eine Vakuumpumpe 25 mittels der Vakuumleitung 23 ein Vakuum an die Vakuumdämmung 21 bereitgestellt werden kann. Weiter kann vorgesehen sein, dass in der Vakuumdämmung 21 ein erstes Dämmmaterial 22 angeordnet ist. Dieses erste Dämmmaterial 22 kann die Wärmeleitfähigkeit der Vakuumdämmung 21 weiter reduzieren und eine Steuerbarkeit der Vakuumdämmung 21 und der damit einhergehenden Wärmeleitfähigkeit weiter verbessern. Insbesondere kann ungewollte Wärmestrahlung unterbunden werden.

Weiter kann vorgesehen sein, dass ein erster Temperatursensor 14 in der ersten Kammer 10 angeordnet ist. Der erste Temperatursensor 14 kann ein Signal S14 bereitstellen, welches Informationen bezüglich einer Temperatur des Speicherelements 11 beinhaltet.

Weiter kann vorgesehen sein, dass ein zweiter Sensor 24 zur Messung eines Vakuumdämmungsdrucks in der Vakuumdämmung 21 angeordnet ist. Dieser zweite Sensor 24 kann ein Signal S24, welches Informationen bezüglich des Vakuumdämmungsdrucks beinhaltet, bereitstellen.

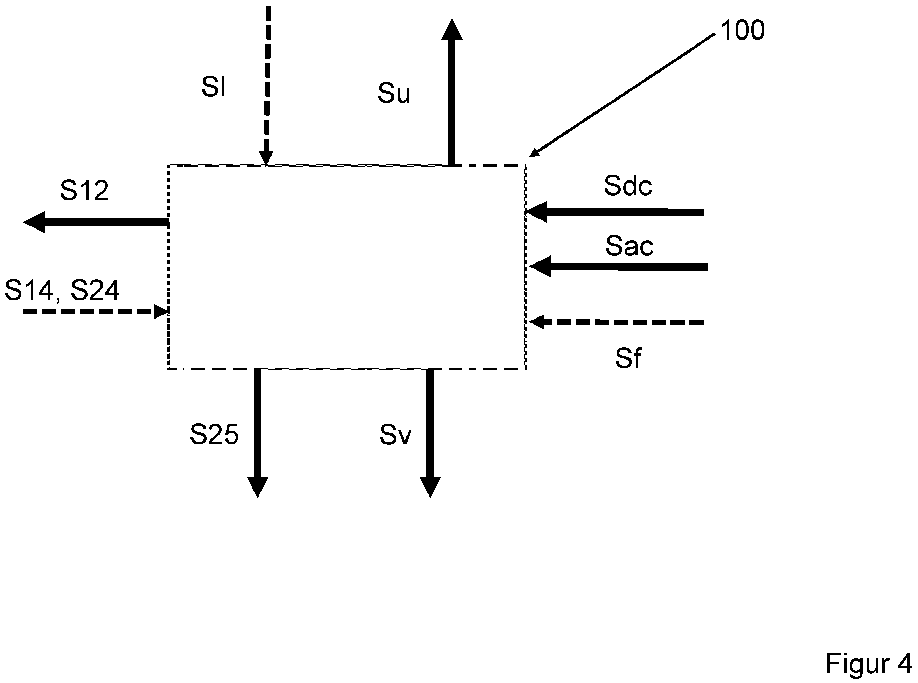

Figur 4 zeigt einen schematischen Signallaufplan einer Steuereinheit 100 eines Hochtemperaturfeststoffspeichersystems 1000.

Zur Steuerung des hier nicht gezeigten Hochtemperaturfeststoffspeichersystems 1000 kann eine Steuereinheit 100 zum Einsatz kommen. Insbesondere kann vorgesehen sein, dass die Signale der unterschiedlichen Sensoren an die Steuereinheit 100 weitergeleitet werden bzw. diese Signale durch die Steuereinheit 100 empfangen werden. Mit anderen Worten kann vorgesehen sein, dass die Steuereinheit 100 basierend auf den empfangenen Signalen entsprechende Aktoren steuert. Im Einzelnen kann vorgesehen sein, dass die Steuereinheit 100 ein Leistungssignal SI von einem externen Warmwassersystem, welches hier nicht gezeigt ist, empfängt. Das Leistungssignal SI kann insbesondere Informationen bezüglich eines erforderlichen Wärmebedarfs des Warmwasserspeichers enthalten. Folglich kann basierend auf dem Signal SI ein durch den Hochtemperaturfeststoffspeicher 1 bereitzustellende thermische Energie bestimmt werden.

Basierend auf dem Leistungssignal SI kann durch ein erstes Sensorsignal S14 und ein zweites Sensorsignal S24 ein einzustellender Vakuumdämmungsdruck der Vakuumdämmung 21 durch die Steuereinheit 100 ermittelt werden. Zum Einstellen des einzustellenden Vakuumdämmungsdrucks kann die Steuereinheit 100 mittels eines Signals S25 die Vakuumpumpe 25 ansteuern. Durch das Einstellen des erforderlichen Vakuumdämmungsdrucks kann die gemäß des Leistungssignal SI erforderliche Leistung von dem Feststoffspeicher an das Rohrelement 32, insbesondere an das Warmwassersystem abgegeben bzw. bereitgestellt werden. Dies kann unter Ansteuerung einer Umwälzpumpe (hier nicht gezeigt) mittels des Signals Su erfolgen, sodass das Wasser bzw. Fluid, durch das Rohrelement 32 zirkuliert.

Weiter ist das Hochtemperaturfeststoffspeichersystem 1000 in einer Ausführungsform auch dazu ausgelegt, in Abhängigkeit von verfügbarer elektrischer Energie gesteuert zu werden. Um einen möglichst ökologischen und effizienten Betrieb das Hochtemperaturfeststoffspeichersystem 1000 zu ermöglichen, kann vorgesehen sein, dass die Steuereinheit 100 dazu ausgebildet ist ein Signal zur Freigabe Sf für die Aufnahme von Netzstrom zu empfangen. Durch diese Signal SF kann beispielsweise durch den Netzbetreiber ein Signal an eine Steuereinheit 100 des Hochtemperaturfeststoffspeichersystems 1000 übermittelt werden, wenn eine Stromabnahme netzdienlich ist. Folglich können die Stromnetze durch eine gesteuerte Entnahme entlastet werden.

Zusätzlich zur Stromentnahme aus dem öffentlichen Netz kann vorgesehen sein, dass die Heizelemente 12 des Hochtemperaturfeststoffspeichersystems 1000 mittels Energie gespeist werden, welche vorzugsweise lokal durch eine Photovoltaikanlage erzeugt wurde. Mit anderen Worten kann vorgesehen sein, dass ein erzeugter Überschuss durch eine lokale Photovoltaikanlage durch die Heizelemente 12 als thermische Energie in dem Hochtemperaturfeststoffspeicher 1 gespeichert wird. Mit anderen Worten kann eine Steuereinheit 100 so ausgebildet sein, dass diese einerseits erkennen kann, ob eine Entnahme aus dem öffentlichen Stromnetz netzgünstig ist und/oder ob überschüssige PV-Leistung eingespeichert werden kann.

Der Feststoffspeicher 11 kann aus Maghemit oder einem anderen Material hoher Dichte (> 2g / cm³) und ausreichender Hitzebeständigkeit bestehen. In dem Feststoffspeicher 11 sind Widerstands-Heizelemente 12 eingelassen, die mit Strom betrieben werden. Der Strom kann aus einer lokalen PV-Anlage, dem Netz oder anderen Quellen bezogen werden. Der Feststoffspeicher 11 kann in einem Ausführungsbeispiel von einer Stahlhülle ummantelt sein. Diese Stahlhülle, welche die erste Kammerwand der ersten Kammer 10 bildet, kann luftdicht von einer weiteren Stahlhülle, welche die zweite Kammerwand der zweiten Kammer 20 bildet, ummantelt und der entstehende erste Raum kann mit mineralischen Perlit oder vergleichbaren Material zur Unterbindung der Wärmestrahlung befüllt sein. Der erste Raum kann mit einer Vakuumpumpe verbunden sein, die es ermöglicht den ersten Raum, insbesondere die Vakuumdämmung auf einen Wert von ca. 0,1 mbar oder weniger zu vakuumieren. Ein Ventil, dass mit der Außenluft in Verbindung steht und elektromechanisch gesteuert wird ermöglicht die Druckregulierung der Vakuumdämmung. Das Ventil kann in der Zuleitung oder im Bereich der Vakuumpumpe oder an beliebig anderer Stelle des ersten Raums angeordnet sein. Außerhalb des vakuumierten ersten Raums befindet sich eine weitere Hülle. Ein dadurch entstandener Raum zwischen der zweiten Kammerwand und der dritten Kammerwand wird mit einer konventionellen hitzebeständigen Dämmung, wie z.B. Mineralwolle befüllt. An der einen Außenseite der zweiten Kammerwand können wasserführende Metallrohre verlegt werden, die an einen konventionellen Pufferspeicher bzw. Warmwassersystem zur Wärmebereitstellung im Bereich 30 bis 90 °C angeschlossen werden. Eine Regelung einer Umwälzpumpe zur Wasserförderung sowie des Unterdruckes in der Vakuumdämmung erfolgt automatisch in Abhängigkeit von der Speicherelementtemperatur und des Wärmebedarfs. Zur Gewährleistung der Betriebssicherheit ist es erforderlich Maßnahmen zu ergreifen, die bei einem ungewollten Verlust der Dämmwirkung des vakuumierten Zwischenraumes durch eine unbeabsichtigte Belüftung gewährleisten, dass eine Temperatur im Außenbereich des Speichers keine Brände oder Schäden verursacht. Darüber hinaus ist durch die im Falle einer ungewollten Belüftung der Vakuumdämmung bei einer hohen Speichertemperatur nicht vermeidbare Verdampfung des Wassers in dem Rohrelement der Wärmeabnahmeschicht (dritte Kammer 30) zu gewährleisten, dass der entstehende Dampfdruck sicher abgelassen werden kann, sich nicht im restlichen hydraulischen System ausbreitet und kein neues Wasser nachfließt. Dieses Ablassen des Dampfdrucks kann mittels eines Entlüftungsventils (hier nicht gezeigt) im Rohrelement 32 erfolgen. Durch das poröse Perlit 22 in der Vakuumdämmung 21 sowie durch die Wärmedämmung 31 kann auch ohne Vakuumierung gewährleistet werden, dass auf einer Außenseite der dritten Kammer 30 des Speichers 1 die Temperatur unter 60°C bleibt.

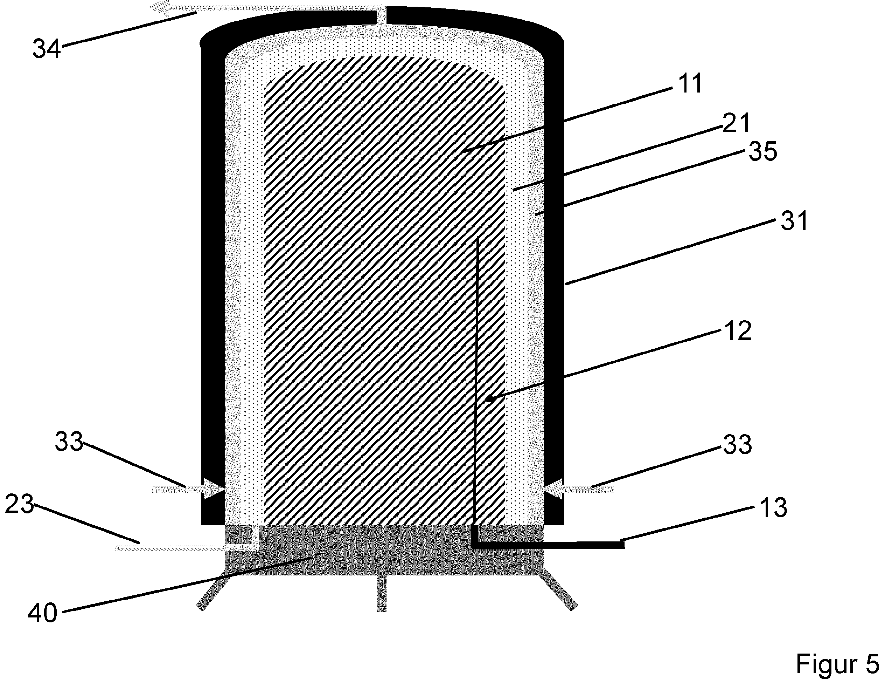

Figur 5 zeigt eine schematische Darstellung eines Hochtemperaturfeststoffspeichers 1 mit einem ersten Abschnitt 35 einer Leitung (hier nicht dargestellt). Der erste Abschnitt 35 weist einen Zulauf 33 und einen Ablauf 34 auf. Der Zulauf 33 und der Ablauf 34 sind durch die hier nicht dargestellt Leitung miteinander verbunden, sodass die Leitung, die den ersten Abschnitt 35 aufweist, mit einer ebenfalls hier nicht dargestellten Pumpe einen Kreislauf bilden. Der Abschnitt 35 ist dazu ausgebildet Wärme eines Speicherelements 11 zumindest teilweise aufzunehmen und über von dem ersten Abschnitt 35 verschiedene Abschnitte der Leitung an die Umgebung oder ein Warmwassersystem abzugeben.

Hierzu weist der Hochtemperaturfeststoffspeichers 1 ein Speicherelement 11 auf, welches wie bereits zu Figur 1 diskutiert in der ersten Kammer 10, hier nicht dargestellt, angeordnet ist. Alternativ bildet das Speicherelement 11 die erste Kammer 10.

Das Speicherelement 11 ist durch eine veränderbare Vakuumdämmung 21 umgeben. Das Speicherelement 11 ist auf einem Halteelement 40 angeordnet. Beispiels weise umgeben das Halteelement 40 und die veränderbare Vakuumdämmung 21 das Speicherelement vollständig. Beispielsweise weist die veränderbare Vakuumdämmung 21 zusätzlich Dämmmaterial auf, sodass thermische Strahlung von dem Speicherelement 11 unterbunden beziehungsweise reduziert wird. Zum Verändern der veränderbaren Vakuumdämmung 21 ist die veränderbare Vakuumdämmung mit einer Vakuumleitung 23 verbunden, sodass mittels einer Vakuumpumpe (hier nicht gezeigt) der Vakuumdruck veränderbar ist. Beispielsweise ist die veränderbare Vakuumdämmung zwischen der ersten Kammer und der zweiten Kammer (beide hier nicht gezeigt) angeordnet.

In dem Speicherelement 11 ist ein Heizelement 12 integriert, welche elektrische Energie, die über eine elektrische Leitung 13 dem Heizelement 12 zugeführt wird, in thermische Energie um. Dies wird in dem Speicherelement 11 gespeichert.

Die veränderbare Vakuumdämmung 21 ist zwischen dem Speicherelement 11 und dem ersten Abschnitt 35 angeordnet, sodass durch verändern der veränderbaren Vakuumdämmung 21 eine Wärmeübertragung zwischen dem Speicherelement 11und dem ersten Abschnitt veränderbar oder einstellbar ist.

Beispielsweise ist der erste Abschnitt, wie auch die Leitung, als Rohrelement 32 ausgebildet, welches an einer Außenseite der zweiten Kammer 20 angeordnet ist. Insbesondere erstreckt sich der erste Abschnitt über einen Großteil der Fläche der Außenseite der zweiten Kammer 20. Insbesondere erstreckt sich der erste Abschnitt über die gesamte Fläche der Außenwand der zweiten Kammer 20. Beispielsweise ist die zweite Kammer 20, insbesondere die zweite Kammerwand durch den ersten Abschnitt gebildet.

Auf einer der zweiten Kammer 20 beziehungsweise dem Speicherelement 11 abgewandten Seite des ersten Abschnitts 35 ist eine Wärmedämmung 31 angeordnet, die den ersten Abschnitt 35 gegenüber der Umgebung isoliert.

Insgesamt zeigen die Beispiele, wie durch die Erfindung des Hochtemperaturfeststoffspeicher die Wärmeabgabe von einem Hochtemperaturspeicherelement variable an einen Wärmebedarf angepasst werden kann.

Beispielsweise umfasst der Hochtemperaturfeststoffspeicher 1 für ein Warmwassersystem eine erste Kammer 10 mit einer ersten Kammerwand aus einem ersten Kammerwandmaterial, wobei die erste Kammer 10 ein Speicherelement 11 aus einem Feststoff zum Speichern von thermischer Energie umfasst. Weiter umfasst der Hochtemperaturfeststoffspeicher 1 eine zweite Kammer 20 mit einer zweiten Kammerwand aus einem zweiten Kammerwandmaterial, wobei die zweite Kammer 20 die erste Kammer 10, eine veränderbare Vakuumdämmung 21, welche in einem ersten Raum, welcher sich zumindest teilweise zwischen der ersten Kammerwand und der zweiten Kammerwand erstreckt, angeordnet ist, umfasst. Weiter umfasst der Hochtemperaturfeststoffspeicher 1 mindestens ein Rohrelement 32, welches außerhalb der zweiten Kammer 20 angeordnet ist und dazu ausgebildet ist von einem Fluid durchströmt zu werden und beim Durchströmen zumindest einen Teil der thermischen Energie des Feststoffspeicherelements 11 in Abhängigkeit der veränderbare Vakuumdämmung 21 aufzunehmen.

Ferner ist vorgesehen, dass die Vakuumdämmung 21 veränderlich ist. Unter "veränderlich" ist hierbei insbesondere eine einstellbare bzw. veränderbare Vakuumdämmung 21 zu verstehen. Zum Einstellen des Vakuumdämmungsdrucks kann ein Anschluss 23 einer Vakuumdämmung an den ersten Raum erforderlich sein. Insbesondere kann erforderlich sein, dass das Vakuum 21 in den Raum zwischen der ersten Kammer 10 und der zweiten Kammer 20 durch die zweite Kammerwand hindurchgeführt wird. Weiter versteht sich, dass die erste Kammerwand wie auch die zweite Kammerwand aus einem für ein Vakuum geeignetes Material hergestellt sein kann. Insbesondere kann vorgesehen sein, dass die zweite Kammerwand eine hinreichende Materialstärke aufweist. Durch das Einstellen des Vakuumdrucks kann die Isolation zwischen dem Feststoffspeicherelement 11, bzw. der ersten Kammerwand und der zweiten Kammerwand veränderlich eingestellt werden. Beispielsweise wäre denkbar, dass das Speicherelement 11 eine Temperatur von 800 °C aufweist und die Vakuumdämmung 21 so eingestellt wird, dass von dem Speicherelement 11 nur so viel thermischen Energie durch die Vakuumdämmung 21 übertragen wird, dass die zweite Kammerwand eine Temperatur von 60° aufweist. Dabei sind die Zahlenwerte insbesondere nur exemplarisch. Denkbar wäre auch, dass das Speicherelement 11 eine Temperatur von 750 °C aufweist und die zweite Kammerwand eine Temperatur von 70 °C aufweist.

In einer Ausführungsform kann vorgesehen sein, dass in dem ersten Raum zusätzlich zur regelbaren Vakuumdämmung 21 ein erstes Dämmmaterial 22 angeordnet ist.

In dem ersten Raum, insbesondere zwischen der ersten Kammer 10 und der zweiten Kammer 20, kann ein zusätzliches erstes Dämmmaterial 22 angeordnet sein. Insbesondere kann das Dämmmaterial 22 in der veränderbaren Vakuumdämmung 21 angeordnet sein.

Weiter kann vorgesehen sein, dass das mindestens eine Rohrelement 32 eine Wärmedämmung 31 aufweist, welche von der regelbaren Vakuumdämmung 21 verschieden ist.

Weiter kann vorgesehen sein, dass die Rohrelement 32, welches an der Außenseite der zweiten Kammerwand angeordnet ist, eine Wärmedämmung 31 aufweist. Denkbar ist einerseits, dass das Rohrelement 32 direkt bzw. unmittelbar an der Außenseite der zweiten Kammerwand bzw. der zweiten Kammerwand angeordnet ist. Mit anderen Worten stehen das Rohrelement 32 und die zweite Kammerwand in direktem mechanischem Kontakt zueinander. Zusätzlich zum mechanischen Kontakt kann die zweite Kammerwand auch in thermischen Kontakt zu der dem Rohrelement 32 stehen.

Eine Ausführungsform sieht vor, dass der Hochtemperaturfeststoffspeicher 1 für eine Temperatur des Speicherelements 11 von bis zu 800 °C ausgebildet ist.

Mit anderen Worten ist vorgesehen, dass der Hochtemperaturfeststoffspeicher 1 so ausgelegt ist, dass das Speicherelement 11 eine Temperatur von bis zu 800 °C aufweisen kann. Hieraus ergeben sich entsprechende Anforderung an die Komponenten des Hochtemperaturfeststoffspeicher 1. Insbesondere sollte vorgesehen sein, dass die Komponenten, wie beispielsweise die erste Kammerwand, aus einem Material hergestellt sind, bei dem der Schmelzpunkt, vorzugsweise der Glasübergangspunkt, bei 800 °C liegen. Ferner sind auch die mechanischen und/oder elektrischen Komponenten des Hochtemperaturfeststoffspeicher 1 entsprechend auszulegen.

Eine weitere Ausführungsform sieht vor, dass die erste Kammerwand und die zweite Kammerwand zumindest teilweise einander entsprechen, um einen gemeinsamen Boden zu bilden. Dadurch kann eine kompaktere Bauform ermöglicht werden, sodass Anschlüsse durch den gemeinsamen Boden in die erste Kammer 10 geführt werden können, ohne einen Einfluss auf das im übrigen Bereich die erste Kammerwand umgebende Vakuum zu haben. Ferner kann das Speicherelement 11, welches in der ersten Kammer 10 angeordnet ist, direkt auf dem Boden abgelegt bzw. abgestützt werden, sodass eine Kraftübertragung vom Speicherelement 11auf dem Boden erfolgt.

### Bezugszeichenliste

- 1: Hochtemperaturfeststoffspeicher
- 10: erste Kammer
- 11: Speicherelement
- 12: Heizelement
- 13: elektrische Leitung
- 14: erster Sensor
- 20: zweite Kammer
- 21: Vakuumdämmung
- 22: erstes Dämmmaterial
- 23: Vakuumleitung
- 24: zweiter Sensor
- 25: Vakuumpumpe
- 30: dritte Kammer
- 31: Wärmedämmung
- 32: Rohrelement
- 33: Zulauf
- 34: Rücklauf
- 35: erster Abschnitt
- 40: Halteelement
- 100: Steuereinheit
- 1000: Hochtemperaturfeststoffspeichersystem
- SL: Signal einer vorgegebenen Leistung
- Su: Signal Umwälzpumpe
- Sdc: Stromversorgung von einer PV-Anlage
- Sac: Netzstrom
- SF: Netzstromfreigabesignal
- Sv: Ventilsignal
- S25: Signal Vakuumpumpe
- S14: erstes Sensorsignal
- S24: zweites Sensorsignal
- S12: Signal Heizstab

## Patentansprüche

1. Hochtemperaturfeststoffspeicher (1) für ein Warmwassersystem umfassend:
- eine erste Kammer (10) mit einer ersten Kammerwand aus einem ersten Kammerwandmaterial, wobei die erste Kammer (10) ein Speicherelement (11) aus einem Feststoff zum Speichern von thermischer Energie umfasst;
- eine zweite Kammer (20) mit einer zweiten Kammerwand aus einem zweiten Kammerwandmaterial, wobei die zweite Kammer folgendes umfasst:
- die erste Kammer (10);
- eine veränderbare Vakuumdämmung (21), welche zwischen der ersten Kammerwand und der zweiten Kammerwand angeordnet ist; und
- eine Leitung, welche mit einer Pumpe einen Kreislauf bildet, wobei der Kreislauf von einem Fluid durchströmbar ist, **dadurch gekennzeichnet, dass** die Leitung einen ersten Abschnitt aufweist, welcher außerhalb der zweiten Kammer (20) an einer Außenseite der zweiten Kammerwand angeordnet ist, sodass eine Wärmeübertragung zwischen dem ersten Abschnitt und dem Speicherelement (11) durch Verändern der veränderbaren Vakuumdämmung (21) veränderbar ist.

2. Hochtemperaturfeststoffspeicher (1) gemäß Anspruch 1, wobei zwischen der ersten Kammerwand und der zweiten Kammerwand zusätzlich zur veränderbaren Vakuumdämmung (21) ein erstes Dämmmaterial (22) angeordnet ist.

3. Hochtemperaturfeststoffspeicher (1) gemäß Anspruch 2, wobei das erste Dämmmaterial (22) ein mikroporöses Material, insbesondere Perlit, vorzugsweise expandiertes Perlit, und/oder expandiertes Perlit und Siliziumkarbid und/oder pyrogene Kieselsäure aufweist.

4. Hochtemperaturfeststoffspeicher (1) gemäß einem der vorherigen Ansprüche, wobei die erste Kammerwand durch das Speicherelement (11) gebildet ist.

5. Hochtemperaturfeststoffspeicher (1) gemäß einem der vorherigen Ansprüche, wobei der Feststoff einen mineralischen Stoff, einen keramischen Stoff, ein Metall und/oder Graphit aufweist.

6. Hochtemperaturfeststoffspeicher (1) gemäß einem der vorherigen Ansprüche, wobei der Feststoff Maghemit oder ein Material mit einer Dichte unter 4g / cm³, insbesondere unter 2g / cm³ ist.

7. Hochtemperaturfeststoffspeicher (1) gemäß einem der vorherigen Ansprüche, wobei das erste Kammerwandmaterial von dem zweiten Kammerwandmaterial verschieden ist, oder das erste Kammerwandmaterial und das zweite Kammerwandmaterial aus dem gleichen Material, insbesondere Stahl, sind.

8. Hochtemperaturfeststoffspeicher (1) gemäß einem der vorherigen Ansprüche, wobei der erste Abschnitt an einer der zweiten Kammer (20) abgewandten Seite eine Wärmedämmung (31) aufweist, welche von der veränderbaren Vakuumdämmung (21) verschieden ist.

9. Hochtemperaturfeststoffspeicher (1) gemäß einem der vorherigen Ansprüche, wobei der erste Abschnitt als Rohrelement (32) ausgebildet ist.

10. Hochtemperaturfeststoffspeicher (1) gemäß einem der vorherigen Ansprüche, wobei der erste Abschnitt die zweite Kammer (20) räumlich umfasst.

11. Hochtemperaturfeststoffspeicher (1) gemäß einem der vorherigen Ansprüche, wobei der erste Abschnitt in die zweite Kammerwand integriert ist oder die zweite Kammerwand den ersten Abschnitt bildet.

12. Hochtemperaturfeststoffspeicher (1) gemäß einem der Ansprüche 1 bis 8, wobei eine Außenseite der zweiten Kammerwand und ein Mantel, welcher an der Außenseite der zweiten Kammerwand angeordnet ist und zu dieser beabstandet ist, den ersten Abschnitt bilden.

13. Hochtemperaturfeststoffspeichersystem (1000) folgendes umfassend:
- einen Hochtemperaturfeststoffspeicher (1) gemäß einem der vorherigen Ansprüche
- ein Heizelement (12) zum Bereitstellen von thermischer Energie an das Speicherelement (11);
- eine Vakuumpumpe (25), welche mit dem ersten Raum verbunden ist, zum Bereitstellen eines Vakuums an die Vakuumdämmung (21);
- einen ersten Sensor (14) zum Bestimmen einer Speicherelementstemperatur;
- einen zweiten Sensor (24) zum Bestimmen eines Vakuumdämmungsdrucks; und
- eine Steuereinheit (100) zum Steuern des Vakuumdämmungsdrucks, welche mit dem Heizelement (12), dem ersten Sensor (14) und dem zweiten Sensor (24) verbunden ist, um eine Wärmeabgabe von dem Speicherelement (11) an das Fluid in Abhängigkeit von einem Wärmebedarf eines Warmwassersystems und der Speicherelementstemperatur einzustellen.

14. Verfahren zum Steuern einer veränderbaren Vakuumdämmung (21) um eine vorgebbare Leistung, welche von einem Hochtemperaturfeststoffspeicher (1) gemäß einem der Ansprüche 1 bis 12 an ein Fluid durch die veränderbare Vakuumdämmung (21) hindurch abgegeben wird, einzustellen, wobei das Verfahren die folgenden Schritte umfasst:
- Bestimmen einer Speicherelementstemperatur;
- Berechnen eines Vakuumdämmungsdrucks basierend auf der Speicherelementstemperatur und der vorgegebenen Leistung; und
- Ansteuern einer Vakuumpumpe (25), sodass der berechnete Vakuumsdämmungsdruck eingestellt wird.

15. Verfahren gemäß Anspruch 14, wobei die vorgebbare Leistung von einem Warmwassersystem als Wärmebedarf vorgegeben wird.

## Claims

1. A high-temperature solid-state storage device (1) for a hot water system, comprising:
- a first chamber (10) having a first chamber wall made of a first chamber wall material, wherein the first chamber (10) comprises a storage element (11) made of a solid material for storing thermal energy;
- a second chamber (20) having a second chamber wall made of a second chamber wall material, wherein the second chamber comprises:
- the first chamber (10);
- an adjustable vacuum insulation (21) disposed between the first chamber wall and the second chamber wall; and
- a conduit forming a circuit with a pump, wherein the circuit is capable of being traversed by a fluid, **characterized in that** the conduit has a first section arranged outside the second chamber (20) on an outer side of the second chamber wall, such that heat transfer between the first section and the storage element (11) can be varied by altering the adjustable vacuum insulation (21).

2. High-temperature solid-state storage device (1) according to claim 1, wherein a first insulating material (22) is arranged between the first chamber wall and the second chamber wall in addition to the adjustable vacuum insulation (21).

3. High-temperature solid-state storage device (1) according to claim 2, wherein the first insulating material (22) comprises a microporous material, in particular perlite, preferably expanded perlite, and/or expanded perlite and silicon carbide and/or pyrogenic silica.

4. High-temperature solid-state storage device (1) according to any one of the preceding claims, wherein the first chamber wall is formed by the storage element (11).

5. High-temperature solid-state storage device (1) according to any one of the preceding claims, wherein the solid comprises a mineral substance, a ceramic substance, a metal, and/or graphite.

6. High-temperature solid-state storage device (1) according to any one of the preceding claims, wherein the solid material is maghemite or a material having a density of less than 4 g/cm³, in particular less than 2 g/cm³.

7. A high-temperature solid-state storage device (1) according to any of the preceding claims, wherein the first chamber wall material is different from the second chamber wall material, or the first chamber wall material and the second chamber wall material are made of the same material, in particular steel.

8. High-temperature solid-state storage device (1) according to any of the preceding claims, wherein the first section has thermal insulation (31) on a side facing away from the second chamber (20), which thermal insulation (31) is different from the adjustable vacuum insulation (21).

9. High-temperature solid-state storage device (1) according to any one of the preceding claims, wherein the first section is configured as a tubular element (32).

10. High-temperature solid-state storage device (1) according to any one of the preceding claims, wherein the first section spatially encloses the second chamber (20).

11. A high-temperature solid-state storage device (1) according to any of the preceding claims, wherein the first section is integrated into the second chamber wall or the second chamber wall forms the first section.

12. A high-temperature solid-state storage device (1) according to any one of claims 1 through 8, wherein an outer surface of the second chamber wall and a mantle, which is arranged on the outer surface of the second chamber wall and spaced apart therefrom, form the first section.

13. A high-temperature solid-state storage system (1000) comprising:
- a high-temperature solid-state storage device (1) according to any one of the preceding claims
- a heating element (12) for supplying thermal energy to the storage element (11);
- a vacuum pump (25), connected to the first chamber, for providing a vacuum to the vacuum insulation (21);
- a first sensor (14) for determining a storage element temperature;
- a second sensor (24) for determining a vacuum insulation pressure; and
- a control unit (100) for controlling the vacuum insulation pressure, which is connected to the heating element (12), the first sensor (14), and the second sensor (24), to adjust a heat transfer from the storage element (11) to the fluid based on the heat demand of a hot water system and the storage element temperature.

14. A method for controlling an adjustable vacuum insulation (21) to adjust a preset power output delivered by a high-temperature solid-state storage device (1) according to any one of claims 1 through 12 to a fluid through the adjustable vacuum insulation (21), wherein the method comprises the following steps:
- determining a storage element temperature;
- calculating a vacuum insulation pressure based on the storage element temperature and the specified power; and
- controlling a vacuum pump (25) so that the calculated vacuum insulation pressure is maintained.

15. A method according to claim 14, wherein the preset power is determined by a hot water system as a heat demand.

## Revendications

1. Accumulateur à matière solide à haute température (1) destiné à un système d'eau chaude, comprenant :
- une première chambre (10) comportant une première paroi de chambre constituée d'un premier matériau de paroi de chambre, la première chambre (10) comprenant un élément de stockage (11) en matière solide destiné à stocker de l'énergie thermique ;
- une deuxième chambre (20) comportant une deuxième paroi de chambre constituée d'un deuxième matériau de paroi de chambre, la deuxième chambre comprenant :
- la première chambre (10) ;
- une isolation sous vide variable (21), disposée entre la première paroi de chambre et la deuxième paroi de chambre ; et
- une conduite formant un circuit avec une pompe, ce circuit pouvant être traversé par un fluide,
**caractérisé en ce que** la conduite présente un premier tronçon qui est disposé à l'extérieur de la deuxième chambre (20), sur une face extérieure de la deuxième paroi de chambre, de sorte qu'un transfert de chaleur entre le premier tronçon et l'élément de stockage (11) peut être modifié en modifiant l'isolation sous vide variable (21).

2. Accumulateur à matière solide à haute température (1) selon la revendication 1,
dans lequel un premier matériau isolant (22) est disposé entre la première paroi de chambre et la deuxième paroi de chambre, en plus de l'isolation sous vide variable (21).

3. Accumulateur à matière solide à haute température (1) selon la revendication 2,
dans lequel le premier matériau isolant (22) comprend un matériau microporeux, en particulier de la perlite, de préférence de la perlite expansée, et/ou de la perlite expansée et du carbure de silicium et/ou de la silice pyrogénée.

4. Accumulateur à matière solide à haute température (1) selon l'une des revendications précédentes,
dans lequel la première paroi de chambre est formée par l'élément de stockage (11).

5. Accumulateur à matière solide à haute température (1) selon l'une des revendications précédentes,
dans lequel la matière solide comprend une substance minérale, une substance céramique, un métal et/ou du graphite.

6. Accumulateur à matière solide à haute température (1) selon l'une des revendications précédentes,
dans lequel la matière solide est du maghémite ou un matériau ayant une densité inférieure à 4 g/cm³, en particulier inférieure à 2 g/cm³.

7. Accumulateur à matière solide à haute température (1) selon l'une des revendications précédentes,
dans lequel le matériau de la première paroi de chambre est différent du matériau de la deuxième paroi de chambre, ou bien le matériau de la première paroi de chambre et le matériau de la deuxième paroi de chambre sont constitués du même matériau, en particulier de l'acier.

8. Accumulateur à matière solide à haute température (1) selon l'une des revendications précédentes,
dans lequel le premier tronçon comporte, sur un côté détourné de la deuxième chambre (20), une isolation thermique (31) qui est différente de l'isolation sous vide variable (21).

9. Accumulateur à matière solide à haute température (1) selon l'une des revendications précédentes,
dans lequel le premier tronçon est réalisé sous la forme d'un élément tubulaire (32).

10. Accumulateur à matière solide à haute température (1) selon l'une des revendications précédentes,
dans lequel le premier tronçon englobe spatialement la deuxième chambre (20).

11. Accumulateur à matière solide à haute température (1) selon l'une des revendications précédentes,
dans lequel le premier tronçon est intégré à la deuxième paroi de chambre ou la deuxième paroi de chambre constitue le premier tronçon.

12. Accumulateur à matière solide à haute température (1) selon l'une des revendications 1 à 8,
dans lequel une face extérieure de la deuxième paroi de chambre et une enveloppe, disposée sur la face extérieure de la deuxième paroi de chambre et espacée de celle-ci, constituent le premier tronçon.

13. Système d'accumulation à matière solide à haute température (1000) comprenant :
- un accumulateur à matière solide à haute température (1) selon l'une des revendications précédentes ;
- un élément chauffant (12) destiné à fournir de l'énergie thermique à l'élément de stockage (11) ;
- une pompe à vide (25), reliée au premier espace, destinée à fournir un vide à l'isolation sous vide (21) ;
- un premier capteur (14) destiné à déterminer la température de l'élément de stockage ;
- un deuxième capteur (24) destiné à déterminer la pression de l'isolation sous vide ; et
- une unité de commande (100) destinée à réguler la pression de l'isolation sous vide, qui est reliée à l'élément chauffant (12), au premier capteur (14) et au deuxième capteur (24), afin de régler le transfert de chaleur de l'élément de stockage (11) vers le fluide en fonction des besoins en chaleur d'un système d'eau chaude et de la température de l'élément de stockage.

14. Procédé de commande d'une isolation sous vide variable (21) afin de régler une puissance prédéfinissable qui est délivrée à un fluide à travers l'isolation sous vide variable (21) par un accumulateur à matière solide à haute température (1) selon l'une des revendications 1 à 12, le procédé comprenant les étapes suivantes consistant à :
- déterminer la température de l'élément de stockage ;
- calculer la pression de l'isolation sous vide sur la base de la température de l'élément de stockage et de la puissance prédéfinie ; et
- commander une pompe à vide (25) de manière à régler la pression calculée de l'isolation sous vide.

15. Procédé selon la revendication 14,
dans lequel la puissance prédéfinissable est spécifiée par un système d'eau chaude en tant que besoins en chaleur.
